# EUROPEAN PATENT APPLICATION

(11) **EP 4 406 420 A1**
(43) Date of publication of application: **31.07.2024**
(21) Application number: 23153571.7
(22) Date of filing: 26.01.2023
(51) Int. Cl.: A23K 30/00, A23B 7/015, A23B 9/06, A23L 3/28, A23L 11/30, A23L 25/00

(54) **A METHOD AND A DEVICE FOR THE DEGRADATION OF AFLATOXINS USING VACUUM ULTRAVIOLET RADIATION**

(71) Applicant: Jozef Stefan Institute, 1000 Ljubljana (SI); Interkorn d.o.o., 9231 Beltinci (SI)
(72) Inventor: Recek, Nina, 1000 Ljubljana (SI); Zaplotnik, Rok, 1000 Ljubljana (SI); Primc, Gregor, 1000 Ljubljana (SI); Vesel, Alenka, 1000 Ljubljana (SI); Mozetic, Miran, 1000 Ljubljana (SI); Gselman, Peter, 9231 Beltinci (SI)
(74) Representative: Patentni Biro AF d.o.o.

(57) **Abstract**

The present invention relates to methods for destroying aflatoxins by irradiating the contaminated material with the VUV photons in the range of wavelengths from 100 to 170 nm. The irradiation is preferably performed upon vacuum conditions to enable rapid desorption of the low-weight residues formed upon bond scission in aflatoxins by VUV radiation. The methods of the invention are useful for the detoxification of food or feedstock.

## Description

### FIELD OF THE INVENTION

The invention belongs to the field of devices and methods for the treatment of materials, particularly for the treatment of food to ensure the safety of foodstuff. The present invention relates to a method and a device for the degradation of aflatoxins using vacuum ultraviolet (VUV) radiation.

### BACKGROUND OF THE INVENTION AND THE TECHNICAL PROBLEM

Aflatoxins are mycotoxins produced by two species of *Aspergillus,* a fungus found especially in areas with hot and humid climates. Aflatoxins are dangerous compounds that cause severe diseases in both humans and animals. They are regarded as cancerogenic even at moderate concentrations [Sarma et al.: Aflatoxins: Implications on Health. Indian J Clin Biochem. 2017 Jun;32(2):124-133. DOI: 10.1007/s12291-017-0649-2]. Due to their genotoxic and carcinogenic nature, exposure through food should be kept as low as possible. Aflatoxins can occur in foods such as groundnuts, tree nuts, maize, rice, figs and other dried foods, spices, crude vegetable oils and cocoa beans as a result of fungal contamination before and after harvest. Several types of aflatoxins are produced naturally. Six out of 18 different types of aflatoxins that have been identified are considered important and are designated as B₁, B₂, G₁, G₂, M₁, and M₂, respectively (Dors et al. "Aflatoxins: contamination, analysis and control," in Aflatoxins-Biochemistry and Molecular Biology, pp. 415-438, InTech, Shanghai, China, 2011). Aflatoxin B₁ is the most common and the most widespread in the world and accounts for 75% of all aflatoxins contamination of food and feeds (Ayub and Sachan, "Dietary factors affecting aflatoxin bi carcinogenicity," Malaysian Journal of Nutrition, vol. 3, pp. 161-197, 1997). It is produced both by *Aspergillus flavus* and *Aspergillus parasiticus.*

Aflatoxins M₁ and M₂ are hydroxylated products of aflatoxins B₁ and B₂, respectively, and are associated with cow milk upon ingestion of B₁ and B₂ aflatoxins' contaminated feed. Moreover, once formed from B₁ and B₂ forms, aflatoxins M₁ and M₂ remain stable during milk processing. Aflatoxin M1 is a major metabolite of aflatoxin B1 in humans and animals, which may be present in milk from animals fed with aflatoxin B1 contaminated feed. Aflatoxins are usually present in the form of a thin film; however, in a certain food, such as cheese, their penetration may be in the range of centimetres (Lie and Marth, 1967; J Dairy Sci 50: 1708).

Aflatoxins are chemically inert organic compounds that are stable up to the temperature of about 170 °C, so thermal treatment is not a practical method for degrading such compounds. Aflatoxins are resistive to oxidation even at elevated temperatures, so highly reactive chemicals should be used in order to modify them chemically. Some chemicals capable of irreversible bonding to aflatoxins are disclosed in documents CN109329573, CN109907209, and CN107668199. Other methods include ozonization, ammonization, treatments with intensive sources of ultraviolet (UV) radiation, and treatments with gaseous plasma, usually at 254 or 265 nm, which differs from the present invention. A recent review of available methods for the destruction of aflatoxins is disclosed in the scientific article "K. Kutasi et al., Approaches to Inactivating Aflatoxins - A Review and Challenges, International journal of molecular sciences 2021, 22, 13322". Another review of available methods with a focus on plasma treatments is presented in the scientific article "Y Wu et al., Blocking and degradation of aflatoxins by cold plasma treatments: Applications and mechanisms, Trends in Food Science & Technology 109 (2021)." The authors identified three factors originated from the cold plasma which may be the cause of AFB1 degradation, namely heating, UV radiation and reactive species. None of the currently available techniques enables rapid degradation of aflatoxins at reasonable temperatures and power inputs, therefore there is a need for novel methods that would enable efficient, rapid and user-friendly treatment of various aflatoxin-contaminated materials, particularly food such as seeds, grains, beans, nuts, food, and feedstock. It is a further aim of the invention to provide a method and a device for the degradation of aflatoxins in contaminated material.

### PRIOR ART

Patent application CN114747619 proposes a combination of low-temperature plasma treatments and irradiation with an ultraviolet lamp. The contaminated material first passes a plasma zone, where atmospheric pressure plasma is sustained by a dielectric barrier discharge (DBD). The inventors disclosed the voltage intensity (electric field) between 10 and 70 kV/cm, which is typical for atmospheric pressure plasma sustained by DBD. The material then passes a zone with UV radiation and gaseous plasma. The power density of gaseous plasma is preferably between 0.5 and 4 W/cm², and the power density of UV radiation is between 0.25 and 0.85 W/cm². The preferred wavelength of UV radiation is 222 nm. The third plasma treatment is the final step. The degradation rate of aflatoxins reached 73% after about 150 s of treatment. The treatment is preferably performed in the continuous mode.

Utility model CN206481929 also discloses a device for the degradation of aflatoxins using gaseous plasma and UV radiation, but neither the discharge parameters nor the details about the UV source are disclosed.

Plasma degradation of aflatoxins is disclosed in utility model CN213819718. Products are dropped onto electrodes and treated with gaseous plasma. A gravity diversion module is disclosed to prolong the treatment time of products while passing the gaseous plasma. A similar device is disclosed in utility model CN206507221, except that the gravity diversion module is replaced with a spiral. Yet a third configuration disclosed by the same inventor is presented in utility model CN206481928, but free-fall of contaminated products through gaseous plasma is adopted. An alternative configuration of the gravity diversion module in a plasma device is also disclosed in utility model CN215873339. Alternative plasma configurations for the degradation of aflatoxins are also disclosed in patent applications CN105661114 and CN102334624.

Utility model CN206481930 discloses a plasma device for aflatoxin degradation. The contaminated products may be placed onto a fluidized bed to benefit from uniform treatment with gaseous plasma. A fluidized bed is also disclosed in utility model CN206481927. A transport belt with products to be decontaminated moves through a plasma zone where aflatoxins are supposed to be degraded.

Patent application JP2006296814 provides multiple plasma spaying devices, and the contaminated material is conveyed between the sources. The gaseous plasma is a source of atoms, preferably oxygen atoms. The atoms cause the chemical degradation of toxins. The device is also useful for fungal growth inhibition.

A method for degradation of toxins treatment on the wheat grains by low-pressure radio frequency cold plasma is disclosed in patent application CN113317432. The method has negligible influence on the quality of wheat. Helium and oxygen are preferred gases, and the preferred pressure is 140 Pa. The preferred treatment time is between 1 and 2 minutes.

IN202221043806 discloses a device and method for plasma treatment of various products. The chemical transformation or elimination of chemical residues, including agrochemical residues, pesticides, fungicides, insecticides, and plant growth hormones, occurs upon treatment with atmospheric pressure cold plasma.

JP2012085791 discloses a method for the destruction of aflatoxins using steam of water vapour, which is injected into a heated container. The contaminated material is mounted in the heated container, and gaseous plasma is sustained in the heated container. As a result, the water molecules are atomized, i.e., they dissociate and form OH radicals (and perhaps also O-atoms). The OH radicals have a high oxidation potential, so they interact chemically with aflatoxins, thus causing an irreversible modification of the chemical structure. The method is particularly useful when the contaminated material is treated in batch mode so that ample time is allowed for chemical interaction.

Wang et al. (2016; DOI: 10.1016/j.foodcont.2015.06.030) investigated the effect of pulsed light on the degradation of AFB1 and AFB2 in rice bran and rough rice. He used a white light in the range of wavelegths between 100 and 400 nm. Such radiation causes thermal destruction of any organic material, so Wang applied the radiation in pulses, each pulse provided the energy fluence of 0.52 J/cm². The fluence of photons with wavelength below 170 nm was about 1.27 J/cm².

All the above-mentioned methods exhibit slow degradation at approximately room temperature, wherein the present invention addresses these issues and thus differs from known methods.

### SUMMARY OF THE INVENTION

The technical problem is solved as defined in the independent claims, wherein preferred embodiments are defined in dependent claims.

The essence of the invention is that aflatoxins are degraded by exposure to intensive radiation with photons in the range of wavelengths below about 170 nm, preferably in the range from 100 to 170 nm, most preferably from 100 to 150 nm. This radiation has a penetration depth in aflatoxins of the order of micrometre or less, so the radiation will be absorbed efficiently in the aflatoxins, which typically form a thin film on the contaminated material. The contaminated material is not particularly limited, but the methods were invented for the decontamination of food or feedstock. The photons cause bond scission in the aflatoxin molecules and, thus, degradation within seconds of treatment. This radiation is often referred to as vacuum ultraviolet radiation (thereafter VUV). The nomenclature comes from the fact that such radiation does not propagate in the air but rather in a low-pressure atmosphere (vacuum). The reason is a large cross-section for the interaction of VUV radiation with air molecules. For example, the VUV radiation will be absorbed by oxygen molecules and form oxygen atoms, which will interact with the oxygen molecules to form a more stable compound, i.e., ozone. The ozone is useful for the degradation of toxins, but the majority of ozone is transformed into molecular oxygen before interacting with toxins.

A small dose of VUV radiation will not cause significant damage to aflatoxins. In a preferred embodiment, the dose is at least about 10²¹ VUV photons per m², most preferably between about 10²² and 10²³ VUV photons per m² of the treated material. Much smaller doses are inefficient and much larger impractical because a much larger dose requires a larger power of the VUV source, so it is energetically unfavourable. The dose (fluence) is time-integrated flux of VUV photons and is calculated from measured flux. The flux is measured with any VUV photometer, or with a VUV spectrometer which has been calibrated with a standard source, the standard source has a known flux. In case the flux is constant, the dose is a product of treatment time and flux.

In the preferred embodiment, the contaminated material is exposed to VUV radiation in the absence of air, for example, in vacuum conditions. Preferred atmospheres are hydrogen, helium, argon and neon due to low or absent absorbance in the VUV range. In a further preferred embodiment, the partial pressure of air molecules (nitrogen, oxygen, carbon dioxide, argon, water vapour) in the processing chamber is below 10 Pa to assure for marginal absorption of the VUV radiation by gaseous molecules.

The source of VUV radiation is not particularly limited. All known commercial sources employ gaseous plasma as a source of VUV radiation. For example, the excimer or exciplex lamps often radiate from excited dimers or excited complex molecules. The energy efficiency of such sources is up to several %, and the lifetime is several 1,000 or even 10,000 hours. The efficiency of excimer and exciplex lamps is the highest at elevated pressures, for example, at atmospheric pressure or above. The plasma at atmospheric pressure is kept in a chamber separated from the processing chamber with VUV-transparent housing, typically fused silica of very high purity or magnesium fluoride.

In one embodiment, the source of VUV radiation is a low-pressure gaseous plasma. Plasmas are continous sources of VUV radiation in the range from 100 to 400, which is a spectrum wide enough for degradation of majority of micotoxins. It is preferred that the discharge power for sustaining plasma as the source of VUV radiation is in the range from 200 to 700 W, most preferably from 265 W to 600 W. Usual treatment time is up to 100 s, more preferably up to 60 s, most preferably in the range from 1 to 10 s.

As the same time energy consumption is lower than in xenon pulsed lamps, therefore plasma are a more cost-efficient option. In addition, such plasmas are useful in the methods of the invention because the contaminated material can be assembled in a vacuum chamber at a similar pressure as the pressure of the plasma source of the VUV radiation. In other words, the VUV- transparent window does not have to withstand the pressure difference between the VUV source and the segment of the chamber where the contaminated material is assembled because the source of VUV radiation (i.e., low-pressure plasma) is in the same chamber at the same vacuum level as the contaminated material. This is a preferred embodiment.

According to the invention, the device for the degradation of aflatoxin present in contaminated material is designed as a vacuum chamber with a space arranged to receive the material to be treated. Further, the device comprises:
- a vacuum pump is arranged to create a vacuum in the vacuum chamber,
- a source of VUV radiation, preferably a source of gaseous plasma, is arranged to emit VUV photons, which cause degradation of the aflatoxins in/on the material to be treated.
Flow controllers and/or valves may be provided for the control of conditions inside the vacuum chamber.

In case the source of VUV radiation is gaseous plasma, it may be provided in a separate chamber connected to the vacuum chamber via a VUV-transparent spacer.

Alternatively, the inner wall of the vacuum chamber, containing both the plasma source of VUV radiation and the contaminated material, is covered with a VUV-reflecting material, such as a VUV mirror or a thin layer of pure aluminium. For example, pure aluminium of smooth surface reflects about 75% of VUV radiation at the wavelength of 200 nm and about 20% at 100 nm. The coating on the inner walls of the vacuum chamber that contains both the plasma source of VUV radiation and the contaminated material is useful because it reflects a significant fraction of VUV radiation so that the vacuum chamber could be made of any material.

Additionally, the device may be arranged for continuous treatment of materials. For this purpose, a conveyor belt is provided in the vacuum chamber so that the material to be treated can be transported on the conveyor belt from the entry end of the vacuum chamber towards the exit end of the vacuum chamber.

The invention is particularly suitable for use in the treatment of organic and inorganic materials contaminated with aflatoxins. Most preferably, the use of the method and the device according to the invention is best for treating seeds, grains, beans, nuts, food, feedstock, wherein the aflatoxins are on the surface of the material contaminated with aflatoxins.

### SUMMARY OF FIGURES

The invention will be further described based on exemplary embodiments, examples and figures, which show:
- Figure 1: schematic of the absorption of standard UV radiation arising from the low-pressure mercury lamp and VUV radiation at the wavelength of 200, 150, and 100 nm
- Figure 2: schematic of one embodiment of a system of the present invention, useful for treatment in batch mode
- Figure 3: schematic of an apparatus useful for treating contaminated materials in the continuous mode
- Figure 4: degradation curves of aflatoxin at the VUV flux of 2.4×10²¹ m⁻²s⁻¹, 1.5×10²¹ m⁻²s⁻¹, 4×10¹⁸ m⁻²s⁻¹, and 0.7×10¹⁸ m⁻²s⁻¹

### DETAILED DESCRIPTION OF THE INVENTION

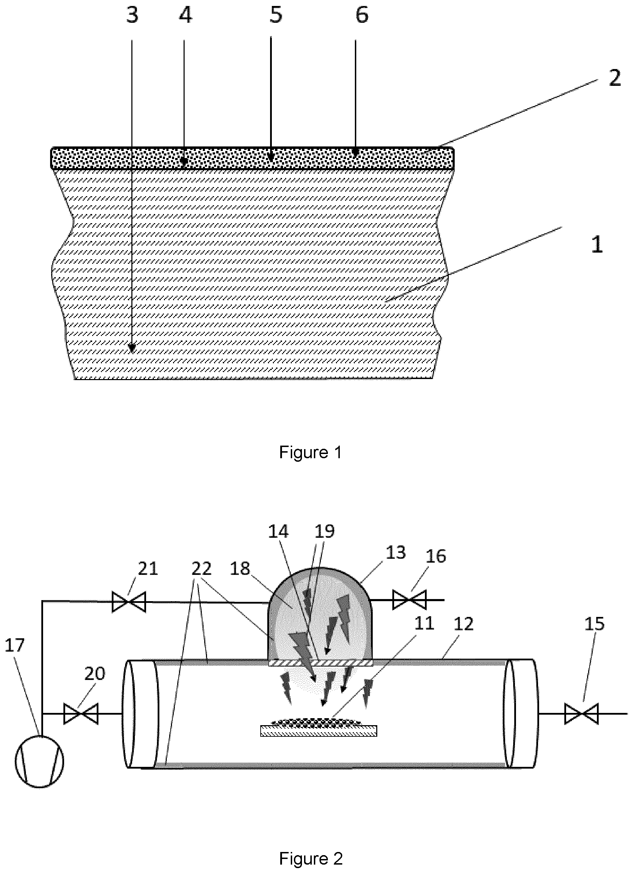

Figure 1 shows the penetration depths of photons of various wavelengths. An organic material (1) is contaminated with a layer of aflatoxins (2). The penetration depths for UV photons at 254 nm (3), VUV photons at 200 nm (4), 150 nm (5), and 100 nm (6) are marked with arrows. The penetration depth of 254 nm (a standard, very efficient source of such radiation is a low-pressure mercury lamp) is over 10 micrometres in organic matter free from water molecules, for example, in aflatoxins. Suppose the thickness of the aflatoxin layer is 1 micrometre (typical for moderate-to-heavy contaminated materials like seeds, grains, and other organic matter likely to be coated with a layer of toxins). In that case, most photons will not be absorbed in the aflatoxins but inside the contaminated material below the layer of aflatoxins. Not only will the treatment be inefficient, but the material itself will be damaged, at least in the layer of thickness of the order of the penetration depth.

The penetration depth of 200-nm photons is roughly a micrometre, so they will be absorbed throughout the film of aflatoxins (Figure 1). The degradation products will be molecular radicals originating from the toxins. The degradation products formed on the surface of the aflatoxin layer may be volatile, so they will desorb from the surface of the contaminated material and be pumped from the vacuum chamber. Those molecular radicals formed deep inside the layer of aflatoxins cannot desorb but are likely to crosslink with other radicals formed within the film of aflatoxins. The 200-nm radiation will therefore cause degradation, but the removal of the reaction products will be inefficient.

The penetration depth of 150 nm photons is about 100 nm. The degradation of aflatoxins by absorption of 150-nm photons will occur in the surface film, which is preferred since the product may be desorbed, thus thinning the layer of aflatoxins. The surface absorption is further enhanced by 100-nm photons whose absorption depth is roughly 10 nm. These photons will preferentially cause bond scission in the very surface film, and the reaction products will be desorbed and pumped away.

The desorption kinetics will be governed by the vacuum level in the treatment chamber. The necessary condition for rapid desorption is the vacuum level at pressures well below the saturated vapour pressure of the product to be desorbed. In one embodiment, the pressure was kept at about 10 Pa to favour the desorption of the reaction products formed upon irradiation with the VUV radiation. The desorption also occurs at higher pressures, but the released molecules may re-adsorb at elevated pressures.

A preferred embodiment of the device, according to the invention, is shown in Figure 2. The contaminated material (11) is inside a vacuum chamber (12). A plasma chamber (13) is connected to the vacuum chamber (12) via a VUV-transparent spacer (14). Both the vacuum chamber (12) and the plasma chamber (13) are evacuated to a pressure level of about 1 Pa to eliminate air. After evacuation, gas is introduced into the vacuum chamber (12) and plasma chamber (13) through needle valves or flow controllers (15, 16) upon continuous pumping with a vacuum pump (17). Gaseous plasma (18) is sustained in the plasma chamber (13). Gaseous plasma (18) emits VUV radiation (19), which is absorbed in the surface film of aflatoxins on the contaminated material (11). The contaminated material (11) is stirred with a suitable stirrer during treatment with the VUV radiation (19) to facilitate a uniform treatment. After treatment, the gaseous plasma (18) is turned off, the valves (15, 16) are closed, and the vacuum chamber (12) and the plasma chamber (13) are vented. The valves (20) and (21) adjust the pumping efficiency for the vacuum (12) and plasma (13) chambers, respectively. There may be pressure differences between the vacuum chamber (12) and plasma chamber (13), but the difference should be small enough to prevent breaking the VUV-transparent spacer (14). For example, a pressure difference may be up to about 1000 Pa. Such a pressure difference will cause a force of 0.1 N/cm2, which is weak enough to prevent breakage of the VUV-transparent spacer (14). The VUV-transparent spacer (14) will separate plasma (18) from the contaminated material (11). The separation is beneficial because the plasma is energetic, so the direct contact of plasma (18) with contaminated material (11) may cause significant heating of the contaminated material (11) because of the surface neutralization of charged particles, relaxation of metastables, and association of plasma radicals to stable molecules. All these surface reactions are exothermic and may cause irreversible modification of the contaminated material (11) because of the high temperature.

In another embodiment, the inner wall of the vacuum chamber (12) and the plasma chamber (13) is coated with a thin film of a material that at least partially reflects the VUV radiation, for example, aluminium. The layer of aluminium is marked as (22) in Figure 2. Alternatively, the thin layer of aluminium (22) is replaced with a VUV mirror. The thin layer of aluminium (22) will reflect some radiation from the gaseous plasma (18), so more photons will be available for the treatment of the contaminated material (11). Obviously, the preferred shape of the plasma chamber (13) coated with a thin layer of aluminium (22) is parabolical. Such a shape will reflect VUV radiation from the gaseous plasma (18) toward the contaminated material (11).

The type of discharge useful for sustaining gaseous plasma (18) in the plasma chamber (13) is not particularly limited. Low-pressure discharges are preferred because the re-absorption of VUV radiation within the gas increases with increasing pressure. Preferably, the discharge operates at a pressure below 1,000 Pa or even below 100 Pa. In a preferred embodiment, the pressure in the plasma chamber (13) is between 3 and 30 Pa.

The type of gas used for sustaining gaseous plasma (18) in the plasma chamber (13) is not particularly limited. Plasma sustained in all gases will emit at least some VUV photons. The efficiency of low-pressure VUV sources may be about 10%, i.e., 100 W of VUV radiation is obtained when powering the plasma with the power of 1,000 W.

The configuration shown in Figure 2 is useful for the treatment of the contaminated material (11) in batch mode. Stirring of the contaminated material (11) upon exposure to VUV radiation from gaseous plasma (18) in the vacuum chamber (12) is preferred since it enables a more uniform treatment of the contaminated material (11).

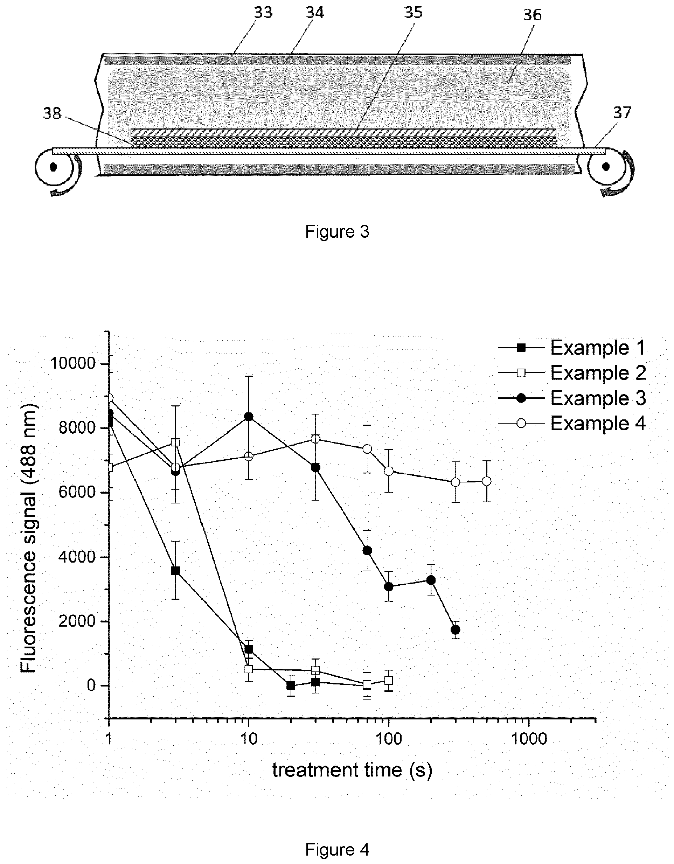

A second possible embodiment of the device useful for the treatment in the continuous mode is disclosed in Figure 3. The inner wall of a long vacuum chamber (33) is covered with a layer of a material that reflects the VUV radiation (34), for example, aluminium. The vacuum chamber is separated into the upper and lower part with a VUV-transparent spacer (35). Gaseous plasma (36) is sustained in the upper part of the vacuum chamber (33). The shape of the vacuum chamber (33) is not particularly limited, but it is cylindrical in a preferred embodiment. There is a movable transport belt (37) in the lower part of the vacuum chamber (33). The transport belt (37) is moved through the lower part of the vacuum chamber (33). Contaminated material (38) is placed onto the transport belt (37), which is moved through the lower part of the vacuum chamber (33), which is not reached by gaseous plasma (36). The residence time of the contaminated material (38) in the gaseous plasma depends on the length of the vacuum chamber (33) and the speed of the transport belt (37), and the intensity of VUV radiation from gaseous plasma (36).

### EXAMPLES

The device shown in figure 2 was used in experiments to prove the efficiency of the method according to the invention. The tested aflatoxins were B1, B2, G1, G2, which were prepared in a mixture of acetonitrile solution in a concentration of B1 and G1 2 µg/ml and B2 and G2 at 0.5 µg/ml. The solution was thereof applied in a 3 µl drop onto the top of 5 mm diameter round borosilicate glass holders. The glass holders were left to dry at room temperature and then used for experiments.

The concentration of aflatoxins on the surface of the contaminated materials is determined by the optical fluorescence method. The samples are irradiated with monochromatic radiation at the wavelength of 370 nm. The radiation causes the excitation of electronic states typical for aflatoxins. The electronic states relax by emitting radiation at the wavelength of 488 nm (the fluorescence). The radiation intensity at the fluorescence wavelength of 488 nm is proportional to the aflatoxin concentration in the approximation of the optically thin medium. The fluorescence signal versus the treatment time is plotted in Figure 4 for several examples. The x-axis scale is logarithmic to enable reading of the signal at various intensities and distinguish between different examples.

### Example 1 - VUV radiation by plasma at a pressure of 18 Pa and a discharge power of 600 W

The configuration presented in Figure 2 was used for Example 1. The thickness of the aflatoxin layer was about 25.5 µm. In example 1, the source of VUV radiation was plasma at a pressure of 18 Pa and a discharge power of 600 W. The fluorescence of aflatoxins is plotted in Figure 4 with full squares. The fluorescence signal (which is roughly proportional to the amount of aflatoxin) drops by roughly 50% from 1 to 3 seconds of treatment time. The signal is almost 10 times lower at 10 s of treatment and becomes below the detection limit of the technique after 20 s. The concentration of aflatoxins, therefore, decreased by 90% upon treatment for 10 s at the discharge power of 600 W. The dose of VUV radiation at the discharge power of 600 W corresponding to the treatment time of 10 s was about 2.4×10²² photons per m² of the contaminated material.

### Example 2 - VUV radiation by plasma at a pressure of 18 Pa and a discharge power of 265 W

In this example, the discharge power for sustaining plasma as a source of VUV radiation was 265 W; all other conditions were the same. The fluorescence of aflatoxins for Example 2 is plotted in Figure 4 with empty squares. The initial decrease is delayed compared to Example 1, but the fluorescence signal is comparable to Example 1 after treatment for 10 s. The dose of VUV radiation at the discharge power of 265 W corresponding to the treatment time of 10 s was about 1.5×10²² photons per m² of the contaminated material.

### Example 3 -VUV radiation by plasma at a pressure of 18 Pa and a discharge power of 70 W

The discharge power for sustaining plasma as a source of VUV radiation in this example was 70 W; other parameters were the same as in previous examples. The fluorescence of aflatoxins for Example 3 is plotted in Figure 4 with full circles. The initial decrease is further delayed as compared to Example 1, and the fluorescence signal is significantly reduced after treatment for 70 s. The fluorescence signal drops to about 20% of the original value only after 300 s of plasma treatment. The dose of VUV radiation at the discharge power of 70 W corresponding to the treatment time of 300 s was about 1.2×10²¹ photons per m² of the contaminated material. Therefore, the discharge power in Example 3 is too low to enable large enough VUV radiation to destroy aflatoxins in a reasonable time.

### Example 4 - VUV radiation by plasma at a pressure of 18 Pa and a discharge power of 15 W (negative control)

The discharge power for sustaining plasma as a source of VUV radiation was 15 W; other parameters were the same as in previous examples. The fluorescence of aflatoxins for Example 4 is plotted in Figure 4 with empty circles. The decrease is marginal even after 600 s of treatment. The dose of VUV radiation at the discharge power of 15 W corresponding to the treatment time of 600 s was about 4.2×10²⁰ photons per m² of the contaminated material. This dose is not sufficient for the degradation of aflatoxins present in the

## Claims

1. A method for the degradation of aflatoxins in a possibly contaminated material using vacuum ultraviolet (VUV) radiation in the range from 100 to 170 nm wherein the dose is at least 1×10²¹ VUV photons per m² of the material.

2. The method according to claim 1, wherein the dose is between 1×10²² and 1×10²⁴ VUV photons per m² of the material.

3. The method according to claim 1 or claim 2, wherein a source of the VUV radiation is gaseous plasma.

4. The method according to claim 3, wherein the discharge power for sustaining plasma as the source of VUV radiation is in the range from 200 to 700 W, preferably from 265 W to 600 W

5. The method according to any of the preceding claims, wherein treatment time is up to 100 s, more preferably up to 60 s, most preferably in the range from 1 to 10 s.

6. The method according to any of the preceding claims, wherein contaminated material is exposed to VUV radiation in the absence of air, i.e., in vacuum conditions.

7. The method according to the preceding claim, wherein atmospheres are hydrogen, helium, argon or neon.

8. The method according to any of the preceding claims, wherein partial pressure of molecules in the atmosphere is below 10 Pa.

9. A device for degradation of aflatoxins in a possibly contaminated material using vacuum ultraviolet radiation, wherein the device is designed as a vacuum chamber with a space arranged to receive the material to be treated, which further comprises:
- a vacuum pump is arranged to create a vacuum in the vacuum chamber,
- a source of VUV radiation, preferably a source of gaseous plasma, is arranged to emit VUV photons, which cause degradation of the aflatoxins in/on the material to be treated.

10. The device according to claim 9, wherein the device further comprises flow controllers and/or valves for the control of conditions inside the vacuum chamber.

11. The device according to claim 9 or claim 10, wherein the material is separated from the plasma source of VUV radiation with a VUV-transparent spacer.

12. The device according to any of the claims from 9 to 11, wherein inner walls of the vacuum chamber are coated with a smooth layer of VUV-reflective material, preferably aluminium.

13. The device according to claim 12, wherein the VUV-reflective coating is covered with a layer of silicon-containing materials of thickness below 100 nm, preferably between 5 and 20 nm.

14. The device according to any of the claims from 9 to 13, wherein a conveyor belt for transport of material inside the vacuum chamber or a stirrer for stirring the material is provided in the vacuum chamber.

15. Use of the method and/or the device according to any of the preceding claims in treatment of organic and inorganic materials contaminated with aflatoxins, wherein the materials are preferably selected in the group comprising seeds, grains, beans, nuts, food, feedstock.
